# EUROPÄISCHE PATENTANMELDUNG

(11) **EP 0 682 887 A2**
(43) Veröffentlichungstag der Anmeldung: **22.11.1995**
(21) Anmeldenummer: 95106782.6
(22) Anmeldetag: 05.05.1995
(51) Int. Cl.: A44B 11/24

(54) **Beschlag für einen Riemen**

(30) Priorität: 10.05.1994 DE 4416430
(71) Anmelder: Harnach, Dietrich, D-42109 Wuppertal (DE)
(72) Erfinder: Harnach, Dietrich, D-42109 Wuppertal (DE)
(74) Vertreter: Eichler, Peter, Dipl.-Ing.

(57) **Zusammenfassung**

Beschlag für einen Riemen, wie ein Tierhalsband (10), insbesondere Schnalle (11), mit einem rechteckartigen Schnallenrahmen (12), zwischen dessen Längsstegen (13) sich etwa in deren Mitte ein Bandbefestigungssteg befindet und unter dessen Querstegen (15,19) sowie über dem Bandbefestigungssteg - das Halsband (10) zum Anlegen am Tierhals anzuordnen ist, insbesondere mit einem dem Bandbefestigungssteg parallelen Anleinbügel (16), und mit einem klappbeweglichen Schnallendorn (17) zum Eingriff in eine Lochung (18) des Halsbands (10).

Damit der Beschlag besser handhabbar wird, wird er so ausgestaltet, daß der Schnallendorn (17) am beim Halsbandschließen frontseitigen Quersteg (15) des Schnallenrahmens (12) angeordnet ist und von oben zum Bandbefestigungssteg hin in die Lochung (18) des Halsbands (10) eingreift.

## Beschreibung

Die Erfindung bezieht sich auf einen Beschlag für einen Riemen, wie ein Tierhalsband, insbesondere Schnalle, mit einem rechteckartigen Schnallenrahmen, zwischen dessen Längsstegen sich etwa in deren Mitte ein Bandbefestigungssteg befindet und unter dessen Querstegen sowie über dem Bandbefestigungssteg das Halsband zum Anlegen am Tierhals anzuordnen ist, insbesondere mit einem dem Bandbefestigungssteg parallelen Anleinbügel, und mit einem klappbeweglichen Schnallendorn zum Eingriff in eine Lochung des Halsbands.

Ein derartiger Beschlag ist als Schnalle aus der DE 32 13 943 A1 bekannt. Der Schnallendorn ist in üblicher Weise am Bandbefestigungssteg angelenkt. Beim Einstecken des freien Bandendes in die Schnalle unter die Querstege und über den Bandbefestigungssteg muß das Bandende zunächst unter dem frontseitigen bzw. einsteckseitigen Quersteg im wesentlichen senkrecht zum rechteckartigen Schnallenrahmen durchgeschoben werden, bis das Tierhalsband eng genug ist, so daß der Schnallendorn in das entsprechende Loch der Lochung des Halsbands hineingesteckt werden kann. Dann muß das Bandende unter dem Anleinbügel und unter dem Quersteg der Rückseite durchgesteckt werden. Erst dann ist das Tierhalsband mit der bekannten Schnalle ordnungsgemäß verschlossen. Das vorbeschriebene zweistufige Verschließen des bekannten Tierhalsbandes ist zeitaufwendig, was sich insbesondere bei einem lebendigen Tier nachteilig auswirkt. Das Halsband kann entweder nicht ordnungsgemäß angelegt werden, oder die daran Beteiligten werden erheblich beansprucht. Hinzu kommmt, daß das Halsband vor dem Einstecken des Schnallendorns in die Lochung erheblich fester angezogen werden muß, als es dem späteren ordnungsgemäßen Sitz entspricht. Das ist wegen der Länge des Dorns erforderlich, der nicht unter den frontseitigen Quersteg geklappt werden darf und daher entsprechend lang ist, so daß er mit beträchtlichem Neigungswinkel zur Ebene des Schnallenrahmens gegen das Band gestellt werden muß, wenn dessen Lochung mit dem Schnallendorn zum Eingriff kommen soll. Daraus resultiert jedoch das vorbeschriebene zu enge Zusammenziehen des Halsbands. Das Einschieben des Schnallendorns in die Lochung ist zwar eine allgemein bekannte Handhabung, wird jedoch durch den Anleinbügel erschwert. Das gilt insbesondere, wenn die Schnalle bereits vor dem Anlegen des Halsbands mit dem Haken einer Hundeleine versehen wurde.

Der Erfindung liegt daher die Aufgabe zugrunde, einen Beschlag mit den eingangs genannten Merkmalen so zu verbessern, daß das Schließen des Riemens oder des Halsbands ohne Beeinträchtigung der Schließsicherheit erheblich vereinfacht werden kann, und zwar im Sinne einer einstufigen Handhabung, bei der nach der Anordnung des Schnallendorns in der Lochung des Halsbands nicht noch weitere Handhabungen zur Erreichung der Schließsicherheit des Beschlags durchgeführt werden müssen.

Diese Aufgabe wird dadurch gelöst, daß der Schnallendorn am beim Halsbandschließen frontseitigen Quersteg des Sohnallenrahmens angeordnet ist und von oben zum Bandbefestigungssteg hin in die Lochung des Halsbands eingreift.

Für die Erfindung ist von Bedeutung, daß die herkömmliche Anordnung des Schnallendorns am Bandbefestigungssteg aufgegeben wird, ohne dabei auch die Führung des Halsbands in Bezug auf die Querstege des Schnallenrahmens bzw. in Bezug auf dessen Bandbefestigungssteg aufzugeben. Infolgedessen kann der Schnallendorn von oben in die Lochung des Halsbands eingreifen. Hierzu wird das Ende des Halsbands, welches zumindest bei seiner Ausführung als solides Lederhalsband eine nicht unbeträchtliche Eigensteife besitzt, in einem Schub unterhalb des frontseitigen Querschnitts über den Bandbefestigungssteg und unter den rückseitigen Quersteg des Schnallenrahmens geschoben. Danach, also wenn das Halsband eng genug geschlossen wurde, kann das Halsbandende losgelassen oder nachgelassen werden. Es hat dann die Tendenz, zurückzurutschen. Dies tut es unter Anlage am Fußpunkt des klappbeweglichen Schnallendorns, der infolge dieser Anlage in Richtung auf die Lochung bewegt wird und in diese eingreifen kann. Dadurch schließt sich der Beschlag selbsttätig. Es ist im Grundsatz also nicht nötig, den Schnallendorn in die Lochung durch eine besondere Manipulation hineinzubewegen. Natürlich kann diese durch die Rückrutschbewegung des Tierhalsbands bewirkte Klappbewegung des Schnallendorns in Schließrichtung noch in einfacher Weise durch Daumen- oder Fingerdruck unterstützt werden. Unbedingt notwendig ist dies jedoch nicht. Die Schließsicherheit des Beschlags bzw. der Schnalle wird durch die frontseitige Anordnung des Schnallendorns und dessen Eingriff von oben in die Lochung des Halsbandes nicht beeinträchtigt, da jede Zug- bzw. Spreizwirkung des Halsbandes die Dornspitze tiefer in die Lochung hineinzieht.

Vorstehend wurde bei der Beschreibung stets auf ein Tierhalsband bzw. Halsband Bezug genommen. Die Erfindung ist jedoch auch bei allen Riemen vorteilhaft zu verwenden, wie etwa bei Gürtelschnallen für Hosen, bei Riemen von Falschirmspringern, Bergsteigern, Seglern usw. sowie im technischen Bereich, in dem Beschläge zum Einsatz kommen. Diese Einsatzbereiche kommen auch bei allen nachfolgend beschriebenen Ausführungsformen infrage, auch soweit sie keine Schnallen betreffen.

Der Beschlag kann dahingehend verbessert werden, daß der Schnallendorn eine zur Oberseite des Halsbands abgebogene Dornspitze aufweist. Eine abgebogene Dornspitze ermöglicht es, den Beschlag so auszubilden, daß der Schnallendorn praktisch bandoberflächenparallel angeordnet ist. Der Beschlag bzw. die Schnalle kann infolgedessen in dem hier betrachteten Bereich sehr flach ausgebildet sein. Die Eingriffssicherheit wird gefördert.

Der Beschlag kann so ausgestaltet werden, daß der Schnallendorn mit dem frontseitigen Quersteg einstückig ausgebildet ist, der an den Längsstegen klappbeweglich lagert. Infolgedessen steht die gesamte Länge des Querstegs zur Anlage am Halsband zur Verfügung und es ergibt sich infolge der Linienberührung zwischen dem Quersteg und dem Halsband ein vergleichsweise großer Mitnahmeeffekt im Sinne einer Schließwirkung des Beschlags, wenn das Halsband unter Anlage am Quersteg im Sinne einer Weitung des Halsbands zurückrutscht. Die Einstückigkeit des Querstegs mit dem Schnallendorn führt zu einem im wesentlichen T-förmigen Bauteil, so daß der rechteckartige Schnallenrahmen im übrigen entsprechend vereinfacht ausgebildet werden kann, nämlich im wesentlichen U-förmig.

Wird der Schnallendorn in herkömmlicher Weise mit dem zugehörigen Quersteg zusammengebaut, so kann der Beschlag derart ausgebildet werden, daß der Schnallendorn den frontseitigen Quersteg umschließt und dort einen Umfassungsdurchmesser hat, der den Stegdurchmesser oder den Außendurchmesser von auf dem Steg angebrachten Rollenhülsen übersteigt. Es wird dann gewährleistet, daß der Schnallendorn stets einen hinreichend großen Außendurchmesser hat, an dem das Halsband die erforderliche Klappbewegung durch reibende Anlage verursachen kann.

Um die Anwendung des Beschlages weiterhin zu vereinfachen, kann der Beschlag so gestaltet werden, daß die beiden Querstege mit einem mindestens der doppelten Halsbanddicke entsprechenden Abstand oberhalb des Bandbefestigungsstegs angeordnet sind. Es ist dann nicht erforderlich, ein steifes Halsband im Bereich des Beschlags zu biegen, um ihn unter den Querstegen und über dem Bandbefestigungssteg anzuordnen. Es genügt ein gerades Durchstecken des freien Endes des Halsbandes.

Es ist vorteilhaft, den Beschlag so auszubilden, daß die beiden Längsstege aus Flachmaterial hergestellt sind, das mit dem rückseitigen Quersteg einstückig ist. Der Schnallenrahmen bzw. dessen einstückigen Stege können dann in einem einzigen Arbeitsgang ausgestanzt bzw. geprägt werden, wobei diese Bauform besonders vorteilhaft ist, wenn der Sohnallendorn mit dem frontseitigen Quersteg einstückig ist.

Damit sich eine insgesamt flache Bauweise des Beschlags im Bereich der Querstege ergibt, wird der Beschlag so ausgebildet, daß der rückseitige Quersteg als im wesentlichen halsbandparallele Platte ausgebildet ist. Die halsbandparallele Platte ist zugleich ein optisches Gestaltungselement, welches darüber hinaus auch zur Aufnahme von Kennzeichen dienen kann, z.B. einer Registrierungsnummer oder einer Anschrift.

Wenn der Beschlag so ausgebildet wird, daß der Bandbefestigungssteg mit dem Schnallenrahmen relativ schwenkbeweglich verbunden ist und mit dem Anleinbügel einen zumindest fast geschlossenen Ring bildet, ergeben sich weitere Vorteile. Im wesentlichen ist der Sitz des Beschlages besser, weil von der Leine her auf den Anleinbügel ausgeübte Zugkräfte nicht zu einem Verkippen des Beschlages führen können, so daß die Schnalle das Tier drückt. Die Schwenkbeweglichkeit des Bandbefestigungsstegs bzw. des Anleinbügels bewirkt aber auch eine Erleichterung der Handhabung des Beschlags, da der Anleinbügel mit seiner Hauptebene in diejenige Richtung gekippt werden kann, aus der der Haken der Tierleine aufgesteckt werden soll.

Um die Handhabung des Beschlags noch weiter zu verbessern, ist dieser dahingehend ausgebildet, daß der Anleinbügel und der Bandbefestigungssteg aus einem Stück gebogenen Rundmaterials hergestellt sind, dessen vom Bandbefestigungssteg abgehende Bügelarme mit in der Ringebene gelegenen Griffhilfen versehen sind. Der relativ zum Schnallenrahmen kippbewegliche Anleinbügel kann mit den Griffhilfen besser festgehalten werden.

Im Sinne der Erleichterung der Anwendung des Beschlags ist es auch, wenn der Querarm des Anleinbügels zum Bandbefestigungssteg hin verformt ist. Der aufzusteckende Haken kann dann beim Aufstecken nicht so leicht seitlich abrutschen.

Die Erfindung bezieht sich des weiteren auch auf einen Beschlag, der zwei zum Umschließen eines Anleinbügels od.dgl. bestimmte Zangenenden hat, die von jeweils einem daran starren und relativ gegenläufig um eine gemeinsame Schwenkachse schwenkbeweglichen Betätigungsarm entgegen einer Federkraft zu öffnen sind, welcher eine Grifffläche aufweist.

Bei diesem bekannten Beschlag ist die Schwenkachse im Bereich zwischen den Zangenenden und den Betätigungsarmen vorhanden, die V-förmig ausgebildet sind und von der V-Form abweichende, aufeinander zu weisende Enden haben, die ineinander gesteckt sind, so daß sich eine geschlossene Kontur ergibt, in die ein Zugteil eingreift, welche die Abwinkelungen der V-förmigen Betätigungsarme im Sinne eines Schließens der Zangen beaufschlagt, wenn an der Leine gezogen wird. Trotzdem und trotz der Wirkung einer Feder zwischen den beiden Zangenenden kann es dazu kommen, daß sich dieser Beschlag ungewollt öffnet, so daß die Schnalle des Tierhalsbands freigegeben wird. Das ist insbesondere dann der Fall, wenn der Beschlag mit einem Betätigungsarm gegen eine Ecke oder gegen eine Kante gezogen wird, beispielsweise gegen eine Hauskante. Es entsteht dann eine Querkraft, welche die Zangenenden zu öffnen vermag. Auch ein vorzeitiges Ziehen des Tieres am Halsband kann zum Öffnen des Beschlags führen, wenn der Anleinende seine Hand noch an den Betätigungsarmen hat und er das Tier durch Zug am Beschlag instinktiv zurückhalten möchte. Es kommt auch dann zu einer ungewollten Öffnungsbewegung des Beschlags. Infolge der Anwendung des Zugteils bei dem bekannten Beschlag ist dieser vergleichsweise aufwendig, und zwar sowohl bezüglich seiner Längserstrekkung, als auch bezüglich der Vielzahl seiner Bauteile.

Der Erfindung liegt daher die weitere Aufgabe zugrunde, einen Beschlag mit den vorgenannten Merkmalen dahingehend zu verbessern, daß er bei einfacher Gestaltung sicherer in der Anwendung ist.

Diese Aufgabe wird dadurch gelöst, daß die Betätigungsarme und ihre Zangenenden aus Flachmaterial bestehen, daß die Zangenenden der flach aufeinander liegenden Betätigungsarme hakenförmig ausgebildet sind und einander überlappen, daß die gemeinsame Schwenkachse der Betätigungsarme am zangenabgewandten Ende des Beschlags angeordnet ist, und daß die Grifffläche an einer Schmalkante des Betätigungsarms zwischen dem Zangenende und der Schwenkachse vorhanden ist.

Für diese Weiterbildung des Beschlags ist zunächst von Bedeutung, daß er aus Flachmaterial besteht. Seine Bestandteile können dementsprechend auf einfache Weise hergestellt werden. Dabei wird unter dem Begriff des Flachmaterials auch solches verstanden, das aus formgestalterischen Gründen nicht nur durch einfaches Ausstanzen mit eventueller Verformung hergestellt werden kann, sondern beispielsweise mit einem Spritzgießverfahren hergestellt werden muß. Infolge des Einsatzes von Flachmaterial können die Zangenenden besser hakenförmig ausgebildet werden und einander überlappen. Die Überlappung ergibt in Verbindung mit der Hakenförmigkeit der Zangenenden eine vergleichsweise große Sicherheit des Beschlags. Selbst wenn einer der beweglichen Betätigungsarme ungewollt verschoben wird, bewirkt die Hakenförmigkeit des anderen Betätigungsarmes, daß ein ungewolltes Öffnen und damit ein Freigeben der Schnalle des Tierhalsbandes nicht möglich ist. Die Überlappung steigert diese Wirkung. Von weiterer Bedeutung ist, daß die gemeinsame Schwenkachse der Betätigungsarme am zangenabgewandten Ende des Beschlag angeordnet ist. Die Betätigungsarme der Zangenenden liegen infolgedessen mit letzteren auf derselben Seite der Schwenkachse, was den Aufbau des Beschlags vereinfacht und die Grundlage für eine Verkürzung des Beschlags ist. Dementsprechend werden also die Griffflächen jedes Betätigungsarms zwischen Zangenende und Schwenkachse vorhanden sein. Damit ist es nach wie vor möglich, den Beschlag über den größten Teil seiner Länge mit der Haltehand zu umfassen, um so für eine ausreichend schnelle und sichere Handhabung dieses Beschlags bei seiner Verbindung mit einer Schnalle des Tierhalsbands zu erreichen. Zieht das anzuleinende Tier unerwartet, so kann dies nicht zu einer unerwünschten Betätigung des Beschlags führen. Die Finger bzw. die Haltehand gleitet aus dem Bereich der Griffflächen der Betätigungsarme ab in Richtung der Schwenkachse, wo eine Haltebewegung der Finger bzw. der Hand kaum noch öffnungswirksam ist.

Um den Beschlag einfach bedienen zu können, wird er so ausgebildet, daß die Betätigungsarme in Schließstellung der Zangenenden seitlich über das Flachmaterial des jeweils anderen Betätigungsarms vorstehende Griffflächen aufweisen. Durch Zusammendrücken beider Handhaben wird der Beschlag vollständig geöffnet. Das gewollte oder ungewollte Eindrücken einer einzigen Handhabe läßt diesen Öffnungszustand nicht erreichen.

Damit das Zusammendrücken der Betätigungsarme möglichst problemlos erfolgen kann, wobei die Bedienung des Beschlags offensichtlich sein soll, wird der Beschlag so ausgebildet, daß die Griffflächen an konturerweiternden flachmaterialstarken einstückigen Seitenlappen vorhanden sind.

Eine besonders vorteilhafte und sinnfällige Ausgestaltung des Beschlages liegt vor, wenn die Seitenlappen zangenendseitig eine Querkante und zum schwenkachsseitigen Ende hin eine tangentenartige Kante aufweisen. Diese Gestaltung ist insbesondere dafür geeignet, daß der Beschlag bei voller Öffnung vorgeschoben werden kann, um ihn mit einer Schnalle eines Halsbands zu koppeln. Er ist andererseits aber auch so ausgebildet, daß ein Zurückziehen des Beschlags dazu führt, daß die die Seitenlappen gedrückt haltenden Finger leicht abgleiten, um die Federkraft zwischen den Betätigungsarmen wirksam werden zu lassen.

Der Beschlag kann so ausgebildet werden, daß die Betätigungsarme jeweils außerhalb ihres für das Verschwenken erforderlichen gegenseitigen Überlappungsbereichs mit einer bis auf die Höhe der Außenfläche des benachbarten Betätigungsarms vorspringenden Verdickung versehen sind. Es ergibt sich eine gefällige Seitenansicht und die Möglichkeit zur Stabilisierung des Beschlags.

Um den Beschlag klein zu halten und insbesondere eine flache Bauform zu erreichen, wird der Beschlag so ausgebildet, daß eine die Schwenkachse umgebende Schenkelfeder vorhanden ist, deren Federschenkel jeweils einen Betätigungsarm im Sinne gegenseitigen Überlappens der Zangenenden beaufschlagen.

Von besonderer Bedeutung ist des weiteren, daß der Beschlag mit der Schnalle des Halsbands oder mit einem anderen der Ankopplung dienenden Teil leicht zusammengesteckt werden kann. Es ist deswegen von besonderer Bedeutung, die Sohnalle so auszubilden, daß die einander überlappenden Zangenenden mit ihren Außenkanten einen Aufstecktrichter für den Anleinbügel bilden. Der Einstecktrichter liegt im wesentlichen in der Ebene des Beschlages, so daß diese quer zum Anleinbügel angestellt werden kann, um den Beschlag in einfacher Weise aufschieben zu können.

Der Beschlag kann in besonderer Weise stabil und dabei doch kompakt ausgebildet werden, wenn die Betätigungsarme außen von einer im Längsschnitt U-förmigen, aus Flachmaterial bestehenden Klammer umfaßt sind, welche die Seitenlappen frei läßt. Die freigelassenen Seitenlappen sind in Verbindung mit der U- förmigen Klammer besonders sinnfällig als Betätigungsteile für den Beschlag zu erkennen.

Der Zusammenbau der U-förmigen Klammer mit den Betätigungsarmen erfolgt vorzugsweise dergestalt, daß die U-förmige Klammer schwenkachsenseitig mit der Schwenkachse und zangenendseitig mit einem Verbindungsstift zusammengehalten ist. Für die Schwenkachse ergibt sich dabei neben der Lagerung der Betätigungsarme ein weiterer Nutzen durch Stabilisierung der U-förmigen Klammer. Der zangenendseitige Verbindungsstift bewirkt die zangenendseitige Stabilisierung des Beschlags.

Des weiteren kann die U-förmige Klammer dazu herangezogen werden, den Angriff des Beschlags am Anleinbügel der Halsbandschnalle zu stabilisieren. Dazu wird der Beschlag so ausgebildet, daß jeder Schenkel der U-förmigen Klammer U-förmige Vorsprünge zum seitlichen Umfassen des Anleinbügels aufweist. Das Umfassen des Anleinbügels durch die insbesondere hakenförmigen Zangenenden und die U-förmigen Vorsprünge der Klammer auf beiden Seiten der Zangenenden ergibt eine stabile Verbindung, die insbesondere auch durch Verkanten des Beschlags nicht ungewollt gelöst werden kann.

Eine weitere, die Sicherheit des Beschlags betreffende Ausgestaltung wird dadurch erreicht, daß jeder Betätigungsarm mit einem zur Schwenkachse gerichteten Haken versehen ist, der den Verbindungsstift hintergreift. Der den Verbindungsstift hintergreifende Haken verhindert, daß der Betätigungsarm weiter als konstruktiv vorgesehen ausgeklappt werden kann. Infolgedessen kann der Haken nur bestimmungsgemäß eingesetzt werden.

Um den Beschlag in Verbindung mit einer Halteleine anwenden zu können, wird er vorteilhafterweise so ausgestaltet, daß die Klammer mit einem Leinenbügel oder Wirbel versehen ist.

Leinenbügel oder Wirbel beanspruchen insbesondere Lederleinen oder Riemen an deren Schlaufenkanten. Hier reißt die Leine an, ohne daß die Deckschicht eingerissen wird. Dieses Anreißen, welches die Funktion der Lederleine nicht ernsthaft beeinträchtigen kann, führt jedoch zu Reklamationen, welche vermieden werden sollen. Der Beschlag wird daher so ausgebildet, daß der Leinenbügel oder der Wirbel in einem Leinenbefestigungssteg eine der Richtung der Zugkraft der Leine entgegengesetzte Wölbung in der Leinenebene aufweist. Infolgedessen wird die Belastung des Bandes oder Riemens an den Schlaufenkanten herabgesetzt.

Die Erfindung wird anhand von in der Zeichnung dargestellten Ausführungsbeispielen erläutert. Es zeigt:
- Fig.1: eine perspektivische Ansicht des Beschlages mit einer Halsbandschnalle und daran befindlichem Halsband, dessen einsteckbreites Halsbandende in Einsteckposition vor der Schnalle angeordnet ist,
- Fig.2: eine der Fig.1 entsprechende Darstellung mit eingestecktem Halsbandende,
- Fig.3: die Anordnung der Fig.1 in Seitenansicht,
- Fig.4: eine Aufsicht auf die Schnalle der Fig.3 mit in die Darstellungsebene geklapptem Anleinbügel,
- Fig.5: eine Aufsicht auf einen weiteren Beschlag gemäß der Erfindung,
- Fig.6: einen weiteren Beschlag in perspektivischer Ansicht, der als Haken zum Zusammenwirken mit dem Anleinbügel der Beschläge der Fig.1 bis 5 bestimmt ist,
- Fig.7: eine Seitenansicht des Beschlags der Fig.6 mit einem Wirbel für eine Leine,
- Fig.8: eine schematisierte Aufsicht auf den Beschlag der Fig.6 und
- Fig.9: zwei Betätigungsarme des Beschlags der Fig.6 bis 8.

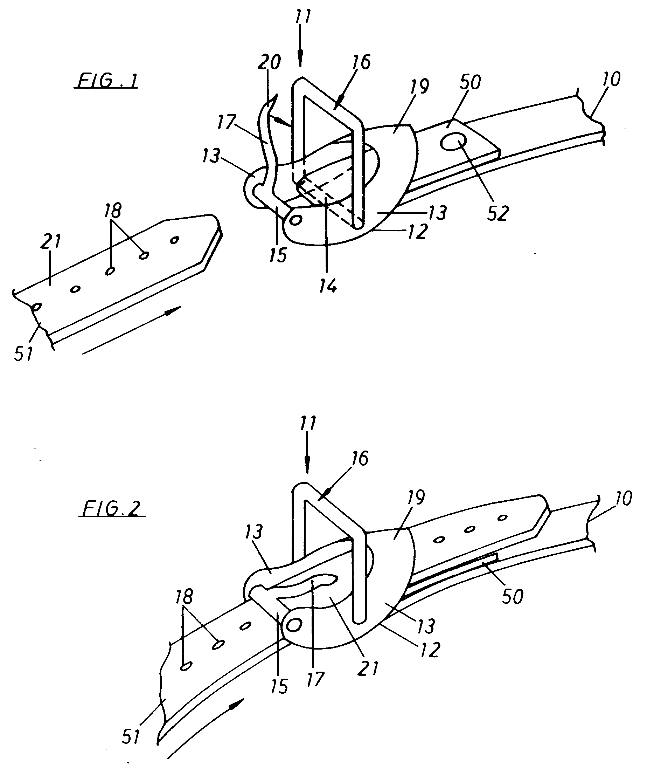

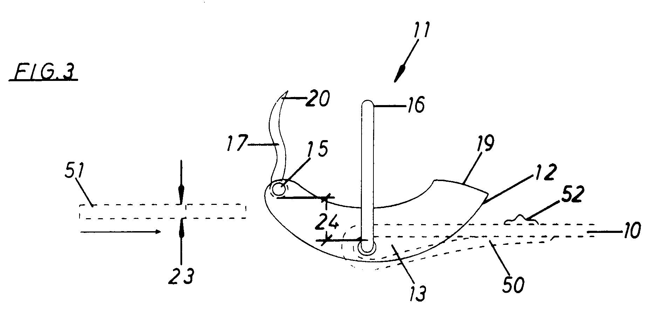

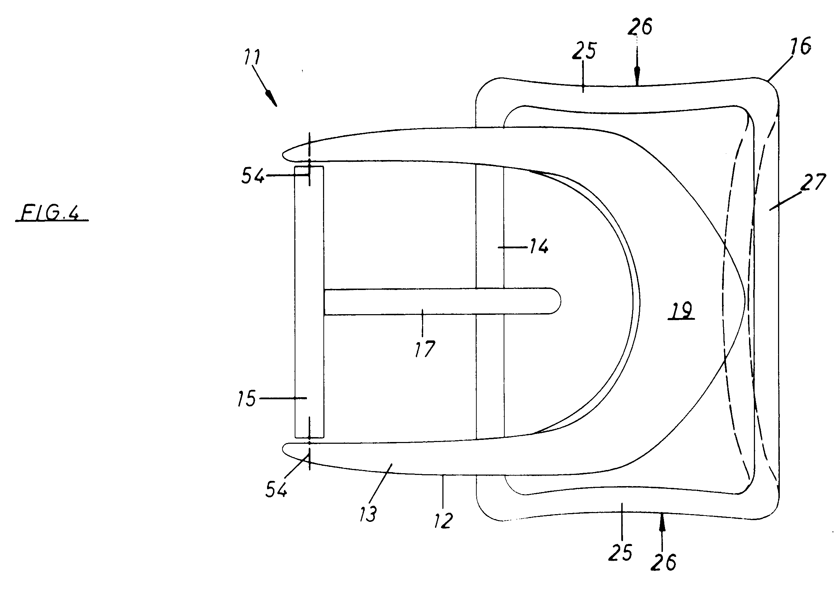

Die in den Fig.1 bis 5 jeweils dargestellten Schnallen 11 sind jeweils mit einem Ende 50 eines Tierhalsbands 10 gelenkig verbunden, dessen anderes Ende 51 einsteckseitig vor der Schnalle 11 angeordnet ist. Die gelenkige Verbindung des Endes 50 des Bandes 10 erfolgt durch Umschlagen um den Bandbefestigungssteg 14 und Vernieten mit einem Befestigungsniet 52 gemäß Darstellung in den Fig.1 und 3. Das einsteckseitige Ende 51 des Bands 10 kann in Pfeilrichtung in die Schnalle 11 hineingesteckt werden, um dort mit Hilfe der Lochung 18 fixiert zu werden. Die Lochung 18 besteht in üblicher Weise aus einer Vielzahl von Löchern, deren Durchmesser auf einen Schnallendorn 17 abgestimmt sind.

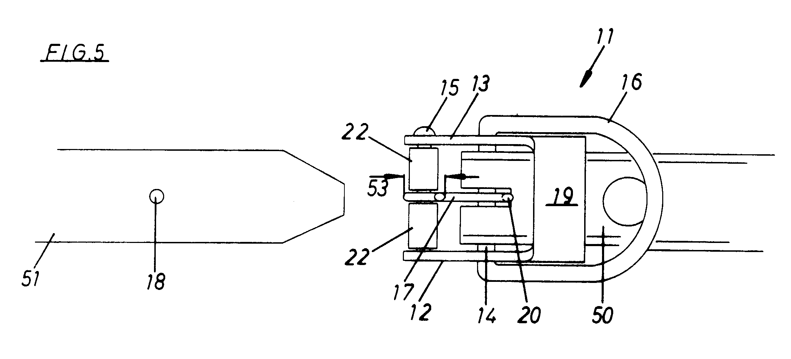

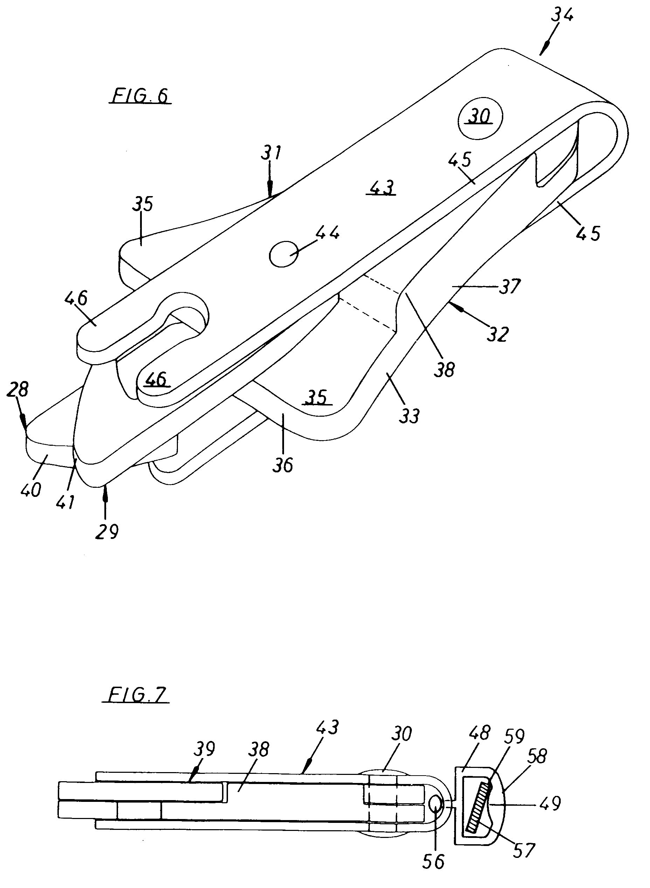

Die Schnalle 11 besteht aus einem rechteckartigen Schnallenrahmen 12, der aus zwei einander parallelen Längsstegen 13 sowie einem frontseitigen, nämlich einsteckseitigen Quersteg 15 und letztlich aus einem rückseitigen Quersteg 19 besteht. Die rechteckartige Konstruktion des Sohnallenrahmens 11 ist am ehesten aus der Fig.5 ersichtlich. Der Schnallenrahmen 12 der Fig.1 bis 4 wird jedoch ebenfalls noch als rechteckartig angesehen.

Die beiden Längsstege 13 des Schnallenrahmens 12 bestehen, ebenso wie der rückseitige Quersteg 19, aus Flachmaterial. Dabei ist das Flachmaterial der Längsstege 13 zumindest im wesentlichen mit einander parallelen Flächenebenen ausgebildet, während der Quersteg 19 jeweils eine mehr oder weniger halsbandparallele Platte ist. Fig.5 zeigt die Halsbandparallelität exakt, während der Quersteg 19 der Fig.1 bis 4 mehr oder weniger schildartig gewölbt ausgebildet ist, mit entsprechend gerundeten bzw. geschwungenen Übergängen zu den Längsstegen 13. Die Längsstege 13 und der Quersteg 19 bilden ein einziges Bauteil, das in einem Arbeitsgang durch Stanzen und Biegen bzw. Prägen ausgebildet werden kann. Die Enden dieses U-förmigen Bauteils sind durch den Quersteg 15 miteinander zu der erforderlichen Rahmenform verbunden.

Der Quersteg 15 ist gemäß Fig.5 ein an den einsteckseitigen Enden der Längsstege 13 befestigter Stift, z.B. ein Nietstift. Auf diesem Nietstift sind, diesen umhüllend, Rollhülsen 22 angebracht, welche das Einstecken des Bandendes 51 erleichtern. Zwischen den beiden Rollhülsen 22 ist der Schnallendorn 17 angebracht und hat dort einen Umfassungsdurchmesser 53, welcher größer ist, als der Außendurchmesser der Rollhülsen 22.

Der Schnallendorn 17 der Fig.1 bis 4 ist mit dem Quersteg 15 einstückig zu einem T-förmigen Bauteil ausgebildet. Dieses Bauteil ist in den Lagerwangen bildenden Längsstegen 13 klappbeweglich gelagert, was durch die Lagerstellen 54 der Fig.4 angedeutet wird. Die konstruktive Ausführung kann beispielsweise durch spezielle Lagerstifte gebildet werden, aber auch dadurch, daß die Enden des Querstegs drehbar in den Längsstegen 13 ruhen.

Der auf dem frontseitigen Quersteg 15 klappbewegliche Klappdorn 17 hat eine Dornspitze 20, die zur Oberseite 21 des Halsbands 10 abgebogen ist. Eine derartige abgebogene Dornspitze 20 ist insbesondere geeignet, von der Oberseite 21 des Halsbands 10 in dessen Lochung 18 einzugreifen, wenn das Bandende 51 aus der in Fig.1 dargestellten Stellung in die in Fig.2 dargestellte Stellung hineingeschoben ist.

Damit die gebogene Dornspitze 20 tief genug durch die Lochung 18 gesteckt werden kann, ist das Bandende 50 im Bereich des Bandbefestigungssteg 14 ausgeschnitten, so daß die Dornspitze nicht auf der Außenfläche des Bandendes 50 aufliegen kann. Das gilt auch für die schematisierte Darstellung der Fig.1.

Das Hineinschieben des einsteckseitigen Halsbandendes 51 wird dadurch erleichtert, daß die Querstege 15,19 gemäß Fig.3 mit einem Abstand 24 oberhalb des Bandbefestigungsstegs 14 angeordnet sind. Infolgedessen kann das Einsteckende 51 mit der Halsbanddicke 23 unterhalb des Querstegs 15 und des Querstegs 19 praktisch ohne Krümmung über den Bandbefestigungssteg 14 geschoben werden, was bei steifen Bändern sehr vorteilhaft ist und die Betätigung der Schnalle erheblich erleichtert.

Wenn das Einsteckende 51 gemäß Fig.2 eingeschoben ist und losgelassen wird, tendiert es infolge der Umspannung des Tierhalses dazu, zurückzurutschen. Dieses Zurückrutschen ist mit einem Bestreben zur Spreizung gegen den Quersteg 15 verbunden. Infolgedessen führt das Zurückrutschen des Bandendes 51 dazu, daß der Klappdorn 17 in seine Sperrstellung geklappt wird und dabei in die Lochung 18 eingreift. Die Verstellung wird bei den Ausführungsformen der Schnalle 11 gemäß den Fig.1 bis 4 durch reibende Anlage am Quersteg 15 verursacht, der den Schnallendorn 14 verschwenkt, während bei der Ausführungsform gemäß Fig.5 die reibende Anlage am Umfassungsdurchmesser 53 des Klappdorns 17 erfolgt.

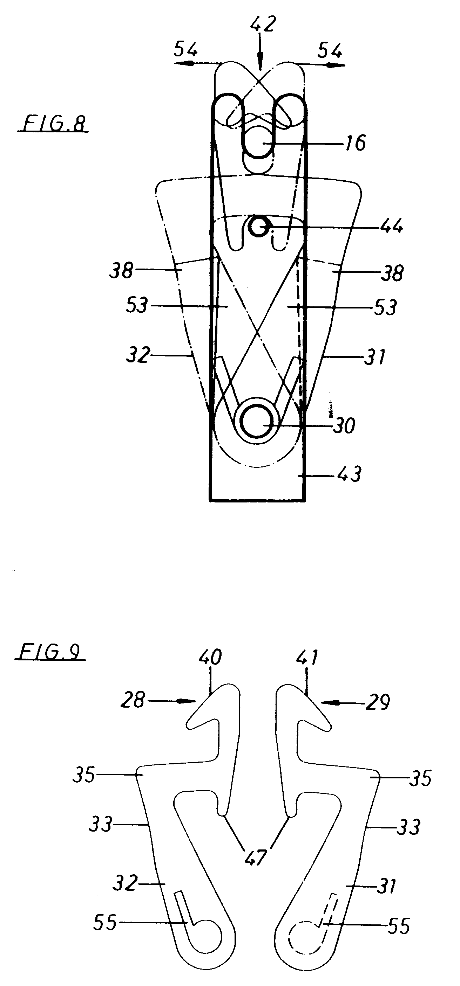

Die Fig.4,5 zeigen Anleinbügel 16, die baulich mit dem Bandbefestigungssteg 14 zu einem einzigen Bauteil zusammengefaßt sind, das aus Rundmaterial besteht und im Bereich des Bandbefestigungsstegs 14 einen unter dem Schnallendorn 17 gelegenen, nicht dargestellten Schlitz hat. Am Anleinbügel 16 wird beispielsweise der in Fig.6 dargestellte Haken angebracht, um das Halsband mit der Leine zum Führen des Tiers zu verbinden. Der Anleinbügel 16 ist wegen der gelenkigen Lagerung des Bandbefestigungsstegs 14 in den Längsstegen 13 klappbeweglich und infolgedessen in den Fig.4,5 in deren Darstellungsebene wiedergegeben. Während der Anleinbügel 16 der Fig.5 im wesentlichen halbkreisförmig ausgebildet ist, zeigt Fig.4 einen Querarm 27 des Anleinbügels 16, der parallel zum Bandbefestigungssteg 14 ausgebildet ist. Hierdurch wird das Aufschnappen eines Hakens z.B. gemäß Fig.6 erleichtert. Eine weitere Verbesserung wird dadurch erreicht, daß der Querarm 27 des Anleinbügels 16 gemäß der gestrichelten Darstellung in Fig.4 zum Bandbefestigungssteg hin verformt ist. Die Vertiefung erleichtert nicht nur das Aufschnappen eines Hakens, sondern sie bewirkt auch, daß der Anleinbügel 16 nicht versehentlich unter den rückseitigen Quersteg 19 geklappt werden kann, was beim Durchstecken des einsteckseitigen Endes 51 des Bands 10 zu einer Fehlbedienung führen könnte.

Die Anleinbügel 16 der Fig.1 bis 3 und 5 sind mit einander parallelen geradlinigen Bügelarmen 25 versehen. Die Bügelarme 25 der Fig.4 sind jedoch in ihrer Ebene mit dem Bandbefestigungssteg aufeinander zu gewölbt und haben dadurch entstehende Griffhilfen 26, mit denen der Anleinbügel 16 bzw. der gesamte aus dem Anleinbügel 16 und dem Bandbefestigungssteg 14 bestehende Ring so ausgerichtet werden kann, daß die Ringebene auf den am Anleinbügel 16 zu befestigenden Haken zuweisen kann.

Da zumindest der von einem Haken zu erfassende Querarm 27 des Anleinbügels 16 zweckmäßigerweise aus Rundmaterial hergestellt wird, ist vorgesehen, den insgesamt aus Anleinbügel 16 und Bandbefestigungssteg 14 bestehenden Ring aus Rundmaterial durch Biegen herzustellen, so daß sich ein dementsprechend einstückiges Bauteil ergibt.

Der in Fig.6 dargestellte Beschlag ist ein Schnapphaken, der am Anleinbügel 16 einer Schnalle 11 befestigt wird, um eine Leine anzukoppeln. Hierzu sind zwei Zangenenden 28,29 vorhanden, welche baueinheitliche Bestandteile zweier Betätigungsarme 31,32 sind, die für sich jeweils in Fig.9 dargestellt wurden. Die Zangenenden 28,29 und ihre dazugehörigen Betätigungsarme 31,32 bestehen jeweils aus Flachmaterial, welches entweder durch Ausstanzen hergestellt wurde, oder durch Spritzgießen. In beiden Fällen kann die Profilierung senkrecht zur Hakenhauptebene gering sein. Jeder Betätigungsarm 31,32 hat eine Verdikkung 38, die gemäß Fig.7 bis auf die Höhe der Außenfläche 39 des benachbarten Betätigungsarms 32,31 vorspringt. Die Verdikkung 38 ist gemäß Fig.7 im Verschwenkbereich der Betätigungsarme 31,32 ausgespart, damit die Betätigungsarme 31,32 jeweils einen Überlappungsbereich 53 haben, um die Betätigungsarme 31, 32 in den Richtungen der Pfeile 54 verschwenken zu können, ohne daß sie daran durch die Verdickung 38 des anderen Betätigungsarms gehindert werden.

Zum Verschwenken der Betätigungsarme 31,32 haben diese eine gemeinsame Schwenkachse 30 z.B. in Gestalt eines Nietbolzens. Die Schwenkachse 30 kann von einer nicht dargestellten Schenkelfeder umgriffen sein, deren Enden in die aus Fig.9 ersichtlichen Ausnehmungen 55 der Arme 31,32 eingreifen und diese im Sinne einer Schließbewegung der Zangenenden 28,29 beaufschlagen, so daß sie die in den Fig.6 und 8 abgebildete Schließstellung einnehmen.

In der Schließstellung der Betätigungsarme 31,32 überlappen sich die Zangenenden 28,29 derart, daß der Anleinbügel 16 umschlossen ist. Um den Anleinbügel 16 vom Haken freizubekommen, ist jeder Betätigungsarm mit einem Seitenlappen 35 versehen, welcher quer zur Längserstreckung der Betätigungsarme 31, 32 vorspringt und zwar in der Richtung des hakenförmigen Zangenendes 28,29. Der Seitenlappen 35 ist durch eine im wesentlichen senkrecht zur Längsachse des Hakens vorspringende Querkante 36 mit einer sich daran etwa im rechten Winkel anschließenden Kante 37 ausgebildet, die sich etwa tangentenartig zum Ende 34 des Hakens in den Bereich der Schwenkachse 30 erstreckt. An dieser Kante 37 ist eine Grifffläche 33 ausgebildet, die z.B. geriffelt ist, um einem Abrutschen der Finger entgegen zu wirken. Auch die Verdickung 38 kann hierzu dienen. Wenn auf die Seitenlappen 35 so weit gedrückt wird, daß ein weiteres Zusammendrücken wegen der Materialbreite der Betätigungsarme 31,32 nicht mehr möglich ist, nehmen die Zangenenden 28,29 die Öffnungsstellung ein, in der sie so weit voneinander entfernt sind, daß der Anleinbügel 16 problemlos aus den Zangenenden 28, 29 herausgezogen werden kann.

Um den Schnapphaken in einfacher Weise mit dem Anleinbügel 16 zusammenstecken zu können, sind die Außenkanten 40,41 der Zangenenden zur Schwenkachse 30 hin abgeschrägt und bilden infolgedessen einen Einstecktrichter 42. Wird der Schnapphaken mit derart abgeschrägten Außenkanten 40,41 auf den Anleinbügel 16 gesteckt, so ist hierzu eine spezielle Betätigung der Seitenlappen 35 nicht nötig. Die Betätigungsarme 31,32 spreizen sich entsprechend dem Andrücken beim Aufschieben auf den Anleinbügel 16 von selbst. Das ist ein wesentlicher Vorteil beim Anleinen eines lebendigen Tieres, durch das die Schnalle und damit der Anleinbügel 16 bewegt werden können. Der Einstecktrichter 42 kann natürlich durch Druck auf die Seitenlappen 35 bis zur vollen Öffnungsweite der Zangenenden 28,29 vergrößert werden. Notwendig ist das jedoch nicht.

Die Betätigungsarme 31,32 könnten ohne weiteres als solche einen funktionsfähigen Haken bilden, wobei ein zu ihnen vertikaler Zusammenhalt von Vorteil sein kann. Ein solcher Zusammenhalt läßt sich beispielsweise durch einen Vorsprung eines Betätigungsarms erreichen, der den anderen hintergreift. Die Stabilität und Baueinheitlichkeit des Hakens läßt sich jedoch insbesondere dadurch verbessern, daß die Betätigungsarme 31,32 innerhalb einer im Längsschnitt U-förmigen Klammer 43 angeordnet sind. Die Seitenlappen 35 ragen aus dieser Klammer 43 heraus. Auch die Klammer 43 kann aus Flachmaterial bestehen, so daß der Haken mit seinen Betätigungsarmen 31,32 insgesamt massenfertigungsgerecht herzustellen ist.

Um die Schenkel der Klammer 43 miteinander zu verbinden, ist im Abstand zur Schwenkachse 30 zu den Zangenenden 28,29 hin ein Verbindungsstift 44 vorhanden, der die Schenkel 45 der Klammer 43 zugleich miteinander verbindet und auf Distanz hält, damit die Verschieblichkeit der Betätigungsarme 31,32 nicht leidet.

Die Schenkel der U-förmigen Klammer 43 springen bis in den Bereich der Zangenenden 28,29 vor und sind dort geschlitzt, so daß an jedem Schenkel 45 der U-förmigen Klammer U-förmige Vorsprünge 46 vorhanden sind, welche den Anleinbügel 16 beidseitig umfassen. Infolgedessen bietet die Klammer 43 Schutz und Stabilität auch im Bereich des anzukoppelnden Anleinbügels 16, insbesondere quer zu den Betätigungsarmen 31,32 bzw. zu deren Erstreckungsebene. Beim Betätigen des Hakens können die Betätigungsarme 31,32 nur so weit gespreizt werden, wie es durch das Zusammendrücken der Seitenlappen 35 möglich ist. Wenn diese im wesentlichen vollständig innerhalb der Klammer 43 angeordnet sind, ist bei ordnungsgemäßer Handhabung ein weiteres Spreizen der Zangenenden 28,29 nicht mehr möglich, an den Zangenenden wirkende Kräfte könnten diese jedoch in unerwünschter Weise weiter auseinanderziehen, wenn nicht Haken 47 vorhanden wären, die zur Schwenkachse 30 hin gerichtet sind und bei einem unerwünschten Verschwenken der Betätigungsarme 31,32 am Verbindungsstift 44 anschlagen und eine weitere Verschwenkung verhindern.

Die in Fig.6 abgebildete Stellung der Betätigungsarme 31, 32 wird dadurch gesichert, daß die Betätigungsarme 31,32 unter der Wirkung der Feder am Verbindungsstift 44 anliegen.

Der Haken muß mit einer Leine verbunden werden. Hierzu können bekannte Ausgestaltungen Anwendung finden. Fig.7 zeigt einen Wirbel 48, der am Ende der Klammer 43 mit einem Wirbelbolzen 56 angebracht ist. Der Bandbefestigungssteg 58 ist mit einer der Zugkraft der Leine 57 entgegengesetzten Wölbung 49 versehen. Infolgedessen wird der Druck des Stegs 58 auf die Leine 57 zur Mitte hin verstärkt bzw. an den Bandkanten 59 herabgesetzt. Diese können an der Kante 59 weniger leicht einreissen, so daß eine Beschädigung der Leine 57 vermieden wird.

## Patentansprüche

1. Beschlag für einen Riemen, wie ein Tierhalsband (10), insbesondere Schnalle (11), mit einem rechteckartigen Schnallenrahmen (12), zwischen dessen Längsstegen (13) sich etwa in deren Mitte ein Bandbefestigungssteg befindet und unter dessen Querstegen (15,19) sowie über dem Bandbefestigungssteg das Halsband (10) zum Anlegen am Tierhals anzuordnen ist, insbesondere mit einem dem Bandbefestigungssteg parallelen Anleinbügel (16), und mit einem klappbeweglichen Schnallendorn (17) zum Eingriff in eine Lochung (18) des Halsbands (10), **dadurch gekennzeichnet**, daß der Schnallendorn (17) am beim Halsbandschließen frontseitigen Quersteg (15) des Schnallenrahmens (12) angeordnet ist und von oben zum Bandbefestigungssteg (14) hin in die Lochung (18) des Halsbands (10) eingreift.

2. Beschlag nach Anspruch 1, **dadurch gekennzeichnet**, daß der Schnallendorn (17) eine zur Oberseite (21) des Halsbands (10) abgebogene Dornspitze (20) aufweist.

3. Beschlag nach Anspruch 1 oder 2, **dadurch gekennzeichnet**, daß der Schnallendorn (17) mit dem frontseitigen Quersteg (15) einstückig ausgebildet ist, der an den Längsstegen (13) klappbeweglich lagert.

4. Beschlag nach Anspruch 1 oder 2, **dadurch gekennzeichnet**, daß der Schnallendorn (17) den frontseitigen Quersteg (15) umschließt und dort einen Umfassungsdurchmesser (53) hat, der den Stegdurchmesser oder den Außendurchmesser von auf dem Steg (15) angebrachten Rollenhülsen (22) übersteigt.

5. Beschlag nach einem oder mehreren der Ansprüche 1 bis 4, **dadurch gekennzeichnet**, daß die beiden Querstege (15,19) mit einem mindestens der doppelten Halsbanddicke (23) entsprechenden Abstand (24) oberhalb des Bandbefestigungsstegs (14) angeordnet sind.

6. Beschlag nach einem oder mehreren der Ansprüche 1 bis 5, **dadurch gekennzeichnet**, daß die beiden Längsstege (13) aus Flachmaterial hergestellt sind, das mit dem rückseitigen Quersteg (19) einstückig ist.

7. Beschlag nach Anspruch 6, **dadurch gekennzeichnet**, daß der rückseitige Quersteg (19) als im wesentlichen halsbandparallele Platte ausgebildet ist.

8. Beschlag nach einem oder mehreren der Ansprüche 1 bis 7, **dadurch gekennzeichnet**, daß der Bandbefestigungssteg (14) mit dem Schnallenrahmen (12) relativ schwenkbeweglich verbunden ist und mit dem Anleinbügel (16) einen zumindest fast geschlossenen Ring bildet.

9. Beschlag nach einem oder mehreren der Ansprüche 1 bis 8, **dadurch gekennzeichnet**, daß der Anleinbügel (16) und der Bandbefestigungssteg (14) aus einem Stück gebogenen Rundmaterials hergestellt sind, dessen vom Bandbefestigungssteg (14) abgehende Bügelarme (25) mit in der Ringebene gelegenen Griffhilfen (26) versehen sind.

10. Beschlag nach Anspruch 9, **dadurch gekennzeichnet**, daß der Querarm (27) des Anleinbügels (16) zum Bandbefestigungssteg (14) hin verformt ist.

11. Beschlag für einen Riemen, wie ein Tierhalsband (10), insbesondere nach Anspruch 1, der zwei zum Umschließen eines Anleinbügels (16) od. dgl. bestimmte Zangenenden (28,29) hat, die von jeweils einem daran starren und relativ gegenläufig um eine gemeinsame Schwenkachse (30) schwenkbeweglichen Betätigungsarm (31,32) entgegen einer Federkraft zu öffnen sind, welcher eine Grifffläche (33) aufweist, **dadurch gekennzeichnet**, daß die Betätigungsarme (31,32) und ihre Zangenenden (28,29) aus Flachmaterial bestehen, daß die Zangenenden (28,29) der flach aufeinander liegenden Betätigungsarme (31,32) hakenförmig ausgebildet sind und einander überlappen, daß die gemeinsame Schwenkachse (30) der Betätigungsarme (31,32) am zangenabgewandten Ende (34) des Beschlags angeordnet ist, und daß die Grifffläche (33) an einer Schmalkante des Betätigungsarms (31,32) zwischen dem Zangenende (28,29) und der Schwenkachse (30) vorhanden ist.

12. Beschlag nach Anspruch 11, **dadurch gekennzeichnet**, daß die Betätigungsarme (31,32) in Schließstellung der Zangenenden (28,29) seitlich über das Flachmaterial des jeweils anderen Betätigungsarms (31,32) vorstehende Griffflächen (33) aufweisen.

13. Beschlag nach Anspruch 12, **dadurch gekennzeichnet**, daß die Griffflächen (33) an konturerweiternden flachmaterialstarken einstückigen Seitenlappen (35) vorhanden sind.

14. Beschlag nach Anspruch 13, **dadurch gekennzeichnet**, daß die Seitenlappen (35) zangenendseitig eine Querkante (36) und zum schwenkachsseitigen Ende (34) hin eine tangentenartige Kante (37) aufweisen.

15. Beschlag nach einem oder mehreren der Ansprüche 11 bis 14, **dadurch gekennzeichnet**, daß die Betätigungsarme (31,32) jeweils außerhalb ihres für das Verschwenken erforderlichen gegenseitigen Überlappungsbereichs (53) mit einer bis auf die Höhe der Außenfläche (39) des benachbarten Betätigungsarms (32,31) vorspringenden Verdickung (38) versehen sind.

16. Beschlag nach einem oder mehreren der Ansprüche 11 bis 15, **dadurch gekennzeichnet**, daß eine die Schwenkachse (30) umgebende Schenkelfeder vorhanden ist, deren Federschenkel jeweils einen Betätigungsarm (31,32) im Sinne gegenseitigen Überlappens der Zangenenden (28,29) beaufschlagen.

17. Beschlag für einen Riemen, wie ein Tierhalsband (10), insbesondere nach einem oder mehreren der Ansprüche 11 bis 16, **dadurch gekennzeichnet**, daß die einander überlappenden Zangenenden (28, 29) mit ihren Außenkanten (40,41) einen Aufstecktrichter (42) für den Anleinbügel (16) bilden.

18. Beschlag nach einem oder mehreren der Ansprüche 11 bis 17, **dadurch gekennzeichnet**, daß die Betätigungsarme (31,32) außen von einer im Längsschnitt U-förmigen, aus Flachmaterial bestehenden Klammer (43) umfaßt sind, welche die Seitenlappen (35) frei läßt.

19. Beschlag nach Anspruch 18, **dadurch gekennzeichnet**, daß die U-förmige Klammer (43) schwenkachsenseitig mit der Schwenkachse (30) und zangenendseitig mit einem Verbindungsstift (44) zusammengehalten ist.

20. Beschlag nach Anspruch 18 oder 19, **dadurch gekennzeichnet**, daß jeder Schenkel (45) der U-förmigen Klammer (43) U-förmige Vorsprünge (46) zum seitlichen Umfassen des Anleinbügels (16) aufweist.

21. Beschlag nach Anspruch 19, **dadurch gekennzeichnet**, daß jeder Betätigungsarm (31,32) mit einem zur Schwenkachse (30) gerichteten Haken (47) versehen ist, der den Verbindungsstift (44) hintergreift.

22. Beschlag nach einem oder mehreren der Ansprüche 1 bis 21, **dadurch gekennzeichnet**, daß die Klammer (43) mit einem Leinenbügel oder Wirbel (48) versehen ist.

23. Beschlag für einen Riemen, wie ein Tierhalsband (10), insbesondere nach Anspruch 22, **dadurch gekennzeichnet**, daß der Leinenbügel oder der Wirbel (48) in einem Leinenbefestigungssteg (58) eine der Richtung der Zugkraft der Leine (57) entgegengesetzte Wölbung (49) in der Leinenebene aufweist.
